# EUROPEAN PATENT SPECIFICATION

(11) **EP 3 365 156 B1**
(45) Date of publication and mention of the grant of the patent: **27.03.2024**
(21) Application number: 16794784.5
(22) Date of filing: 18.10.2016
(51) Int. Cl.: B33Y 80/00, B29C 67/00, B33Y 10/00, B33Y 70/00, B29K 101/12, B29C 64/153

(54) **SELECTIVE SINTERING ADDITIVE MANUFACTURING METHOD AND POWDER USED THEREIN**
VERFAHREN ZUR HERSTELLUNG EINES SELEKTIVEN SINTERADDITIVS UND DARIN VERWENDETES PULVER
PROCÉDÉ DE FABRICATION ADDITIVE PAR FRITTAGE SÉLECTIF ET POUDRE UTILISÉE À CET ÉGARD

(30) Priority: 22.10.2015 US 201562244921 P
(43) Date of publication of application: 29.08.2018
(73) Proprietor: Dow Global Technologies LLC, Midland, MI 48674 (US)
(72) Inventor: KATZENSTEIN, Joshua M., Midland, MI 48674 (US); MOGLIA, Robert S., Midland, MI 48674 (US); LEUGERS, Mary Anne, Midland, MI 48642 (US); PYZIK, Aleksander J., Midland, MI 48674 (US); MATTEUCCI, Scott T., Midland, MI 48674 (US); ALLEN, Sharon, Midland, MI 48674 (US); DERMODY, Daniel L., Midland, MI 48674 (US); BAYER, Roland, 29699 Bomlitz (DE)
(74) Representative: Beck Greener LLP
(86) International application number: PCT/US2016/057434
(87) International publication number: WO 2017/070061

(56) References cited:
- WO-A1-2015/108544
- US-A- 6 007 764
- US-A1- 2004 137 228
- US-A1- 2008 122 141
- US-A1- 2009 312 454
- US-A1- 2011 129 682
- US-A1- 2013 011 660
- US-A1- 2013 216 836
- US-A1- 2014 050 921
- US-A1- 2015 148 467

## Description

### Field of the Invention

The invention relates to a method of additive manufacturing in which thermoplastic polymer powders are selectively sintered, for example, using electromagnetic radiation such as a laser beam. In particular, the invention is one which enables thermoplastic polymers that are essentially transparent to the electromagnetic radiation used to be selectively sintered in an additive manufacturing process.

### Background of the Invention

Selective laser sintering or melting (SLS or SLM) has been used to make 3D parts by selectively sintering powders in a bed of powder (see, for example, U.S. Patent Nos. 5,597,589; 5,647,931; 5,155,324; 5,296,062; 5,304,329; 5,639,070 and 7,569,174). In SLS, typically, a bed of powder is maintained at elevated temperatures is selectively sintered commonly using a CO₂ laser having a coherent beam of radiation around 10.6 micrometers in wavelength. Once a first layer has been sintered, a further layer of powder is metered out and the selective sintering repeated until the desired 3D part is made. Since the powder must be sintered or melted, SLS has been limited by the need for complex apparatus and use of thermoplastic polymers with very particular characteristics to allow for sintering without warping, slumping and achieve desired fusing particularly between layers. This generally has limited the applicability mostly to polyamides (e.g., nylon).

Sintering of the subsurface layer of powder requires careful control of the powder temperature throughout the depth of the powder. Various methods of controlling the powder temperature have been employed. For example, U.S. Pat. No. 5,017,753 described using a downward flow of air through the powder bed. Other methods addressing the thermal inequities have also been described using scanning techniques of the electromagnetic beam such as described by U.S. Pat. Nos. 5,352,405 and 5,427,733.

As mentioned, SLS suffers from lack of sufficient sintering between layers because the electromagnetic beam does not sufficiently penetrate the top layer of powder which invariably sinters prior to the powder below being sintered. Thus, this subsurface layer of powder must rely on thermal conduction to sinter and to bond to the previously sintered layer. This is further complicated in that the powder used needs to flow easily to be able to put uniform layers near the temperature where the powders melt, thus requiring the powders to be mostly spherical, a size where electrostatic effects are not prevalent (i.e., greater than 10 micrometers to about 50 or 100 micrometers in diameter) and to not be tacky or sticky. U.S. Pat. No. 6,007,764 describes powders being comprised of opaque and transparent powders to the electromagnetic radiation, where the opaque powders (e.g., metal powders, nylon, and ceramic powders) absorb and heat the rest of the powder layer. The problem with this approach is that there is non-uniformity heating of the layer and as such may lead to flaws and defects in the layer and between layers. Likewise, it is known to introduce dyes such as carbon blacks into thermoplastic powder such as described by U.S. Pat. No. 5,639,070 and Canadian Pat. Appl. No. 2,371,181 to achieve sufficient absorbance so that overheating of already sintered layers, for example, is avoided, which could result in warpage, sagging and unintended parts of the powder bed to be sintered.

US 2015/148467 A1 discloses a further method of selective sintering additive manufacturing.

It would be desirable to provide a selective sintering additive manufacturing method and parts made therefrom that avoid one or more of the problems of the prior art such as those described above. Likewise, it would be desirable to provide a selective sintering additive manufacturing method for materials that are have low absorbance or are essentially transparent (e.g., polyolefins) to the electromagnetic radiation such as produced by a CO₂ laser while still achieving good layer to layer bonding and sintering within the layer.

### Summary of the Invention

The present invention relates to an improved method of selective sintering additive manufacturing as defined in claim 1. The method comprises,
(i) providing a powder comprising composite particulates comprising a first thermoplastic polymer and a second thermoplastic polymer interspersed with each other,
   wherein the second thermoplastic polymer is a continuous matrix and the first thermoplastic polymer is discontinuously dispersed as grains within the continuous matrix of the second thermoplastic polymer; or
   wherein the first thermoplastic polymer is a continuous matrix and the second thermoplastic polymer is discontinuously dispersed as grains within the continuous matrix of the first thermoplastic polymer;
   and wherein the grains have a median size of 0.05 micrometer to 5 micrometers;
(ii) depositing a layer of said powder at a target surface,
(iii) irradiating a selected portion of said powder so that said powder sinters, bonding said portion of the composite particles within the layer to form a sintered layer,
(iv) repeating steps (i) and (iii) to form successive sintered layers that are also bonded to one another, and
(v) removing the unbonded portions of the powder to yield an additive manufactured part.

Also described herein is an additive manufactured article comprised of at least two layers of powder that has been sintered together within the layer and between the layers, the powder being comprised of a first and second thermoplastic polymer and having an average particle size by number of 10 to 150 micrometers, wherein the first and second thermoplastic polymers are interspersed on a scale smaller than the particle size of the powder within the article.

The improved additive manufacturing method may be used to form an additive manufactured polymeric part. The method is particularly suited to make a thermoplastic part via a SLS method that is primarily comprised of polyolefins such as polyethylene or polypropylene.

### Brief Description of the Drawings

Figure 1 is an electron micrograph of a composite particulate used in the method of this invention in which a first thermoplastic polymer is discontinuously dispersed within a continuous matrix of a second thermoplastic polymer.
Figure 2 is a an electron micrograph of a composite article made using the composite particulate of Figure 1 in which second thermoplastic polymer is discontinuously dispersed within a continuous matrix of the first thermoplastic polymer.

### Detailed Description of the Invention

The selective sintering additive method may use any suitable apparatus and method of selectively sintering to make an additive manufactured part such as those known in the art (i.e., the method steps of depositing, irradiating, repeating and removing). For example the method may employ any one of the methods described or combination of methods described in U.S. Pat. Nos. 5,597,589; 5,647,931; 5,155,324; 5,296,062; 5,304,329; 5,639,070 and 7,569,174; and U.S. Pat. Publ. No. 2013/0216836 and WO 2012/160344.

The method may employ any electromagnetic radiation that may be useful to sinter the composite particles together. The source of electromagnetic radiation may be any useful and known source whether coherent or incoherent such as focused light emitting diodes, lasers (e.g., argon, Nd-YAG and CO₂ lasers) and focused incandescent light sources. Typically, the electromagnetic radiation has a wavelength within 0.5 to 11 micrometers. Desirably, the electromagnetic radiation is coherent and is a laser with a CO₂ laser being particularly suitable considering its extensive use and commercial availability.

The method comprises using a powder comprising composite particulates. The composite particulates are comprised of a first and second thermoplastic polymer that are different. For example, the thermoplastic polymers have an absorbance of the electromagnetic radiation that is different. Illustratively, the first and second thermoplastic have an absorbance that is at least 20% different, preferably 50% or even 100% different with respect to absorbance units. Absorbance units (AU) are defined as by the equation AU=-log₁₀(T) where T is the percent of radiation at a given frequency is transmitted by the sample. For example, the first thermoplastic polymer may have a low absorbance such as at most about 2 AU per mm of film thickness and the second thermoplastic polymer may have an absorbance of at least 4, 5, 8 or even 10 AU per mm of film thickness. The absorbance may be determined by Fourier-Transform Infrared Spectroscopy (FTIR).

It has been discovered that the powder comprised of the composite particles allow the formation of additive manufactured parts by the SLS method of polymers that typically cannot be made into suitable parts. It is believed that the ability to disperse said polymers on a micro or nano scale within the particles allows for the absorbance to be tailored and the heating to be uniformly distributed within and between layers of the powder. Typically, the composite particles desirably have an absorbance of at least 2 or 4 AU to 6 or 8 AU per mm of the electromagnetic radiation source to be used for sintering.

The amount of the first and second thermoplastic polymer in the composite particulate may vary over a large range depending on the desired properties and suitable absorbance in practicing the method. Typically, the amount by mass of the first thermoplastic polymer is from 10% to 90%, but desirably is 50% to 65% and the amount of second thermoplastic polymer is from about 10% to about 70%, 50% or 35% by mass.

The composite particulate may also be comprised of other components. Other components may include other thermoplastic polymers or additives to improve one or more properties or functionalities such as compatibilization of the first and second thermoplastic polymers, or mechanical properties of the final article. The composite particulate may also include inorganic particles typically referred to as fillers, and dyes and anti-caking/flow control agents (e.g., fumed silica). The dyes may be inorganic (e.g., carbon black or mixed metal oxide pigments) or organic dyes such as inoaniline, oxonol, porphine derivative, anthaquinones, mesostyryl, pyrilium and squarylium derivative compounds. Fillers may be any typical fillers used in plastics such as calcium carbonate, silicates, oxides (quartz, alumina or titania).

Generally, the powder has a size and size distributions (volumetric equivalent spherical diameter in micrometers) as follows. The powder typically has a median (D50) of to 10 to 100 micrometers, D10 of 5 to 20 micrometers, D90 of 100 to 200 micrometers. Likewise, there typically are very few to no powder particles less than about 1 micrometers. Preferably, the D50 is 20 or 25 to about 90 or 75 micrometers, the D90 is about 100 to about 90 micrometers. The particle size and size distribution may be determined by known techniques such as microscopic, sieving, or light scattering techniques. D10 is the size where 10% of the particles are smaller and D90 is the particle size where 90% of the particles are smaller in a given distribution by number.

The particulates generally have a porosity of at most about 10% by volume, but more typically have a porosity of at most about 5%, 2% or even 1% to essentially no porosity. The porosity may be determined by suitable micrograph techniques or mercury intrusion porosimetry.

The particulates typically have an average projection sphericity or roundness (called sphericity in further discussion for simplicity) of 0.8 to 1.0, which enhances the flowability of the powder when it is deposited in each subsequent layer when performing the SLS method. Desirably, the average projection sphericity is at least 0.9 or 0.95 to 1. The sphericity is measured by Pentland method (4*A)/(π*L2), where A and L are the area and long diameter (maximum caliper) of the projection of particle, respectively, as described by The Image Processing Handbook, Sixth Ed., J.C. Russ, CRC Press, 2011 (Chapt. 11).

. In one embodiment, the second thermoplastic is a continuous matrix and the first thermoplastic polymer is discontinuously dispersed (referred to as "grains" herein) within the continuous matrix of the second thermoplastic polymer or vice versa. Generally and desirably, the scale of the features of the first and second thermoplastic polymer are of a scale that is substantially smaller than the size of the particulate (e.g., the size of the grains are on at least 5 or 10 times smaller than the particulate size). With regard to two continuous matrices, the scale being referred to is the cross-sections between the two matrices and not the continuum length of each.

The grains within the particulates have a median (D50) size of 0.05 micrometer to 5 micrometers. The D50 grain size is desirably at least 0.1, 0.2 to 4, 2, or 1 micrometers by number. The D10 typically is 0.01, 0.05, or 0.1 micrometer. The D90 is typically 8, 5, or 4 micrometers.

The first and second thermoplastic polymers may also have different temperatures where they melt as defined by the difference between the onset melting temperatures of the two polymers as determined by differential scanning calorimetry (DSC). Temperature where they sinter means a temperature where the polymer will fuse with itself under the process conditions encountered in the SLS method. Typically, the sintering temperature of the first and second thermoplastic polymer are within 20°C or 10°C of each other. For example, as an illustration, the optimum sintering temperature for a given material may not be a single temperature but a range over several degrees C. This window (the "sintering window") is defined by the difference between the onset of melting of the thermoplastic and the onset of crystallization. In an embodiment, where the first polymer is discontinuously dispersed as grains within a continuous matrix of the second thermoplastic polymer, it is desirable for the second thermoplastic polymer to have a sintering temperature lower than that of the first thermoplastic polymer.

The first thermoplastic polymer as described above typically has a low absorbance and is not generally able to be formed into an additive manufactured part by a SLS method. Such first thermoplastic polymers, generally include polyolefins containing only carbon and hydrogen, include any one or any combination of more than one of polyethylene, polypropylene, and polybutylene polymers as well as polymers of olefinic monomers and copolymers of different olefinic monomers (e.g., C₄ to C₁₂ alkenes). The non-functionalized polyolefin serves as the barrier material in the final coating. Desirably, the non-functionalized polyolefin is polypropylene homopolymer or a propylene copolymer because polypropylenic moeities provide optimal barrier properties in a final coating. High density polyethylene (HDPE) is also a desirable non-functionalized polyolefin.

Examples of suitable polyolefins containing only carbon and hydrogen include homopolymers and copolymers (including elastomers) of one or more alpha-olefins such as ethylene, propylene, 1-butene, 3-methyl-1-butene, 4-methyl-1-pentene, 3-methyl-1-pentene, 1-heptene, 1-hexene, 1-octene, 1-decene, and 1-dodecene, as typically represented by polyethylene, polypropylene, poly-1-butene, poly-3-methyl-1-butene, poly-3-methyl-1-pentene, poly-4-methyl-1-pentene, ethylene-propylene copolymer, ethylene-1-butene copolymer, and propylene-1-butene copolymer; copolymers (including elastomers) of an alpha-olefin with a conjugated or non-conjugated diene, as typically represented by ethylene-butadiene copolymer and ethylene-ethylidene norbornene copolymer; and polyolefins (including elastomers) such as copolymers of two or more alpha-olefins with a conjugated or non-conjugated diene, as typically represented by ethylene-propylene-butadiene copolymer, ethylene-propylene- dicyclopentadiene copolymer, ethylene-propylene-1,5-hexadiene copolymer, and ethylene-propylene-ethylidene norbornene copolymer.

The polyolefin may be a propylene-alpha olefin copolymer, for example, propylene-ethylene or a propylene-ethylene-butene copolymer or interpolymer. The polyolefin may be a propylene/alpha-olefin copolymer, which is characterized as having substantially isotactic propylene sequences. "Substantially isotactic propylene sequences" means that the sequences have an isotactic triad (mm) measured by 13C NMR of greater than about 0.85; in the alternative, greater than about 0.90; in another alternative, greater than about 0.92; and in another alternative, greater than about 0.93. Isotactic triads are well-known in the art and are described in, for example, U.S. Patent No. 5,504,172 and International Publication No. WO 00/01745, which refer to the isotactic sequence in terms of a triad unit in the copolymer molecular chain determined by 13C NMR spectra.

Exemplary commercially available polyolefins may include an unfunctionalized polyolefin, such as commercially available high density polyethylenes including, but not limited to, DMDA-8007 NT 7 (Melt Index 8.3, Density 0.965), DMDC-8910 NT 7 (Melt Index 10, Density 0.943), DMDA-1210 NT 7 (Melt Index 10, Density 0.952), HDPE 17450N (Melt Index 17, Density 0.950), DMDA-8920 NT 7 (Melt Index 20, Density 0.954), DMDA 8940 NT 7 (Melt Index 44, Density 0.951), DMDA-8950 NT 7 (Melt Index 50, Density 0.942), DMDA-8965-NT 7 (Melt Index 66, Density 0.952), all available from The Dow Chemical Company, among others. Other examples of base polymers are propylene-ethylene alternating copolymers and propylene-ethylene diblock copolymers e.g., propylene-ethylene alternating copolymers, available under the trade name VERSIFY^{™}, such as VERSIFY^{™} 4200, VERSIFY^{™} 4000, VERSIFY^{™} 3200, VERSIFY^{™} 3000, and VERSIFY^{™} 3300, all available from The Dow Chemical Company. Examples of polypropylene base polymer are PP 6D43 from Braskem America; and PP 35R80 from Propilco S.A.

The second thermoplastic polymer as described above typically has a higher absorbance of the electromagnetic radiation and may also be difficult to form into an additive manufactured part by the SLS method, for example, because of a too high absorbance or poor mechanical properties. Exemplary thermoplastic polymers include functionalized polyolefins (AMPLIFY GR 204 (The Dow Chemical Company), PA18 (Chevron Phillips Chemical Company), Zemac E60 (Vertellus), thermoplastic urethanes (Elastollan^{®} (BASF), Pearlithane^{™} and Estane^{®} and Pellethane^{®} (Lubrizol), Desmopan^{®} (Bayer), IROGRAN^{®} and AVALON^{®} (Huntsman), polyvinyl alcohol (Mowiol^{®} and Poval^{®}), polyamides (Nylon, Zytel^{®} (Dupont), TECHNYL^{®} (Solvay), Rilsan^{®} and Rilsamid^{®} (Arkema), VESTAMID^{®} (Evonik)), poly(ethylene oxides) (POLYOX^{™} N10 (The Dow Chemical Company)), polyesteramide polymers such as described by U.S. Pat. Publs. 20140360366 and 20150218330 and other polymers that have desired absorbance at particular wavelengths such as at 10.6 micrometers.

A functionalized polyolefin is a polyolefin comprising atoms other than carbon and hydrogen, for example, the functionalized polyolefin may be modified with hydroxyl, an amine, an aldehyde, an epoxide, an ethoxylate, a carboxylic acid, an ester, an anhydride group, or combinations thereof. Generally, a functionalized polyolefin comprises functional groups such as protonated (-COOH) or non-protonated (-COO-) acid groups or acid salt. For example, functionalized polyolefins suitable for use in the present invention include ethylene/acrylic acid copolymer (for example, polymers sold under the tradename PRIMACOR^{™} (a trademark of The Dow Chemical Company), NUCREL^{™} (a trademark of E.I. Du Pont de Nemours and Company) and ESCOR^{™} (ESCOR is a trademark of Exxon Corporation)), ethylene/methacrylic acid copolymers (for example, polymers sold under the tradename NUCREL^{™}), maleic anhydride modified polyolefins (for example polymers sold under the tradenames LICOCENE^{™} (a trademark of Clariant AG Corporation), EPOLENE^{™} (EPOLENE is a trademark of Westlake Chemical Corporation) and MORPRIME^{™} (a trademark of Rohm and Haas Chemicals LLC)).

The powder comprised of the composite particles may be made by any suitable method such as those described in U.S. Pat. No. 8,779,053 and 8,680,198. In particular the method desirably makes composite particles of generally smaller size that are then spray dried as described in U.S. Pat. Publ. No. 2015/0126671 as exemplified by the Examples herein.

The method produces a novel additive manufactured part wherein the part is comprised of at least two layers of powder that has been sintered together within the layer and between the layers, the powder being comprised of a first and second thermoplastic polymer and having an average particle size by number of 10 to 150 micrometers, wherein the first and second thermoplastic polymers are interspersed on a scale smaller than the particle size of the powder within the article. The scale being akin to that described above for the grains within a particulate. In a particular embodiment, the first thermoplastic polymer is dispersed in a continuous matrix of the second thermoplastic polymer and has an average grain size of at most 2 micrometers by number.

### EXAMPLES

### Example 1

An aqueous dispersion of the first and second thermoplastic polymers were first made as follows and using the components and feed rates shown in Table.

**Table 1**

| Component | Description | Feed Rate (g/min) | Absorbance at 10.6 µm) (AU/mm) | Melting Temperature (°C) |
|---|---|---|---|---|
| First thermoplastic polymer | a polypropylene having a melt index of approximately 32-38 grams per 10 minutes (ASTM D1238, 230° C./2.16 Kg). For Example, PP 6D43 available from Braskem America | 250 | 1.4 | 137 |
| Second thermoplastic polymer (dispersion stabilizing agent) | Ethylene acrylic acid copolymer with an acrylic acid content of 19.5-21.5 wt % and a melt index of approximately 300 grams per 10 minutes (ASTM D1238, 190° C./2.16 Kg). For example, PRIMACOR ^{™} 5980i ethylene acrylic acid copolymer (PRIMACOR is a trademark of The Dow Chemical Company). | 80 | 11.5 | 61 |
| Additional Second thermoplastic polymer (dispersion stabilizing agent) | Maleic anhydride grafted polypropylene having a softening point in a range of 130-150° C. For example LICOCENE ^{™} PP MA 6452 (LICOCENE is a trademark of Clariant AG Corporation). | 21 | Not determined | 125 |

The components in Table 1 were fed into a 25 millimeter diameter twin screw extruder at the noted feed rates where the components are melted. Provide a heat profile for the extruder such that the components are heated up to 160° C, whereupon into the molten composition in the extruder dimethylethanolamine (CAS No. 108-01-1) at a rate of 26 milliliters per minute (ml/min) and water at a rate of 70 ml/min is fed into the melted components, which forms a dispersion. Subsequently, into the extruder another stream of water was fed at a rate of 320 ml/min into the formed dispersion so as to dilute the dispersion (decrease the solids loading). The extruder temperature profile was such that the diluted dispersion was below 100° C prior to exiting the extruder through a backpressure regulator used to reduce steam production during the extrusion process. The resulting dispersion was cooled to ambient temperature (20 to 30° C) and filtered through a 200 micron filter. The resulting dispersion had a solids content of approximately 42 wt % relative to total dispersion weight. The dispersed particles in the resulting dispersion have an average particle size diameter of 1.0 micrometers as determined by optical microscopy. The polymer in the dispersed particles were neutralized by dimethylethanolamine to 120% by mole of the calculated acid groups in the components put into the extruder. The particle size (mean, mode, and D90) of the particulates in the dispersion are shown in Table 2. Mode is the value at the highest peak in the measured particle size distribution.

The resultant aqueous dispersion was spray dried using a two-fluid nozzle atomizer equipped on a Mobile Minor spray dryer (from GEA Niro). The air pressure to the nozzle was fixed at 100 kiloPascals with 40% flow (equivalent to 4 kilograms per hour air flow). The dispersion was pumped into the heated chamber so it becomes atomized by high air pressure at the nozzle atomizer. The spray drying was conducted in a nitrogen environment with an inlet temperature fixed at 120° C. The feed rate of the dispersion was 15 to 20 mL/min. A vacuum fan was used to continuously pull nitrogen and moisture from the chamber. The dried powder was collected in a glass jar attached to the device cyclone.

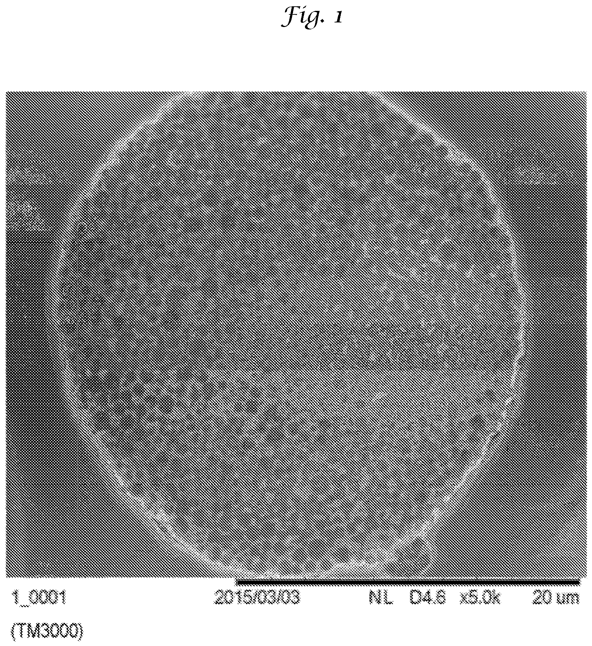

The spray dried powder had a particle size as shown in Table 2. Particle size was analyzed by a Beckman Coulter LS-13-320 particle size analyzer. The samples were diluted into an aqueous solution before measuring. The scanning electron micrograph (Figure 1) shows that, the second thermoplastic polymer, e.g., PRIMACOR^{™} 5980i, forms the continuous phase (appears light in the micrograph).

**Table 2**

| Size Characteristic | Aqueous Dispersion Particulate Size (micrometer) | Spray Dried Powder Particulate Size (micrometer) |
|---|---|---|
| Volumetric mean | 1.016 | 36.1 |
| Volumetric mode | 1.204 | 41.7 |
| Volumetric D90 | 1.641 | 61.4 |
| Number mean | 0.505 | 11.9 |
| Number mode | 0.358 | 7.1 |
| Number D90 | 0.843 | 21.7 |

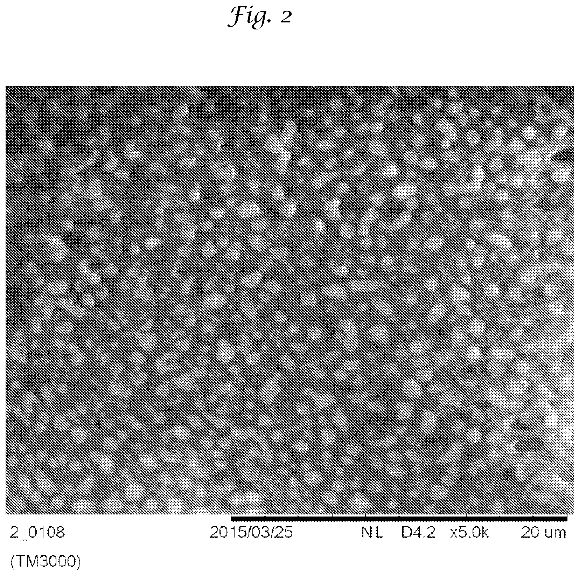

This powder was then spread into a bed of approximately 1000 µm in thickness, heated to near, but below the melting point of the polymer, then exposed to electromagnetic radiation at a 10.6 µm from 30W CO₂ laser using a LaserPro Explorer E-30 laser engraver to raster the radiation over a predefined region causing the powder to fuse in the exposed regions but remain free-flowing in the unexposed regions resulting in an additive manufactured article. Via cross-sectional scanning electron microscopy it is clear that in the sintered article, the continuous phase has inverted and is now the polypropylene (the first thermoplastic), which appears as the dark phase in Figure 2.

### Example 2:

Example 1 was repeated except as follows with the components feed rates used to make the aqueous dispersion shown in Table 3.

**Table 3**

| Component | Description | Feed Rate (g/min) | Absorbance at 10.6 µm) (AU/mm) | Melting Temperature (°C) |
|---|---|---|---|---|
| First thermoplastic polymer | A polyethylene having a melt index of approximately 66 grams per 10 minutes (ASTM D1238, 190° C./2.16 Kg). HOPE DMDA 8965 NT6 available from The Dow Chemical Company | 193.5 | 0 | 128 |
| Second thermoplastic polymer | Ethylene acrylic acid copolymer with an acrylic acid content of 19.5-21.5 wt % and a melt index of approximately 300 grams per 10 minutes (ASTM D1238, 190° C./2.16 Kg). PRIMACOR^{™} 5980i ethylene acrylic acid copolymer (PRIMACOR is a trademark of The Dow Chemical Company). | 66.5 | 11.5 | 61 |
| Additional Second thermoplastic polymer | Maleic anhydride grafted polyethylene having a softening point in a range of 110-120 °C. LICOCENE ^{™} PE MA 4351 (LICOCENE is a trademark of Clariant AG Corporation). | 21.2 | Not Measured | 113 |
| Additional Second thermoplastic polymer | Maleic anhydride grafted polyethylene having with approximately 1% maleic anhydride graft, for example AMPLIFY GR-204 (AMPLIFY is a trademark of The Dow Chemical Company). | 21.2 | 0.38 | 121 |

The components in Table 1 were fed into a 25 millimeter diameter twin screw extruder at the noted feed rates where the components are melted. Provide a heat profile for the extruder such that the components are heated up to 160° C. Dimethylethanolamine (CAS No. 108-01-1) at a rate of 33 grams per minute (ml/min) and water at a rate of 86 grams/min is fed into the melted components as a mixture (119 grams per minute), which forms a dispersion. Additional water was fed via two separate pumps to two locations into a dilution zone of the extruder; at the first location dilution water was fed to the extruder at 240 grams per minute and at the second location dilution water was fed to the extruder at 120 grams per minute. The extruder speed was approximately 1200 rpm. At the extruder outlet, a backpressure regulator was used to adjust to a suitable pressure inside the extruder barrel to reduce steam formation. The aqueous dispersion was filtered through a 25 micron filter. The particle size (mean, mode and D90) of the particulates in the dispersion are shown in Table 4.

The resultant aqueous dispersion was spray dried in the same manner as Example 1 and the particle size was also determined in the same manner with the results shown n Table 4. The second thermoplastic polymer, e.g., PRIMACOR^{™} 5980i, forms a continuous phase in the same manner as in Example 1.

**Table 4**

| Size Characteristic | Aqueous Dispersion Particulate Size (micrometer) | Spray Dried Powder Particulate Size (micrometer) |
|---|---|---|
| Volumetric mean | 0.517 | 23.7 |
| Volumetric mode | 0.431 | 21.7 |
| Volumetric D90 | 0.788 | 41.19 |
| Number mean | 0.369 | 10.05 |
| Number mode | 0.297 | 7.084 |
| Number D90 | 0.843 | 21.7 |

This powder was then spread into a bed of approximately 1000 µm in thickness, heated to near, but below the melting point of the polymer, then exposed to electromagnetic radiation at a 10.6 µm from 30W CO₂ laser using a LaserPro Explorer E-30 laser engraver to raster the radiation over a predefined region causing the powder to fuse in the exposed regions but remain free-flowing in the unexposed regions resulting in an additive manufactured article. In the same manner as in Example 1, the continuous phase has inverted such that the first thermoplastic polymer, HDPE, is the continuous phase.

If the single layer sintered article then has an additional layer of polyolefin powder placed on top of it and is again exposed to the electromagnetic radiation the two layers will fuse together allowing for the build-up of larger three dimensional articles. The articles formed had tensile strengths of about 11 MPa which was essentially the same as for the same compositions that were formed into shapes by melt pressing (~12 MPa) considering the standard deviation of the average (~0.5 to 1 MPa)

## Claims

1. A method of selective sintering additive manufacturing comprising,
(i) providing a powder comprising composite particulates comprising a first thermoplastic polymer and a second thermoplastic polymer interspersed with each other,
wherein the second thermoplastic polymer is a continuous matrix and the first thermoplastic polymer is discontinuously dispersed as grains within the continuous matrix of the second thermoplastic polymer; or
wherein the first thermoplastic polymer is a continuous matrix and the second thermoplastic polymer is discontinuously dispersed as grains within the continuous matrix of the first thermoplastic polymer;
and wherein the grains have a median size of 0.05 micrometer to 5 micrometers;
(ii) depositing a layer of said powder at a target surface,
(iii) irradiating a selected portion of said powder so that said powder sinters, bonding the composite particles of said portion within the layer to form a sintered layer,
(iv) repeating steps (i) to (iii) to form successive sintered layers that are also bonded to one another, and
(v) removing the unbonded portions of the powder to yield an additive manufactured part.

2. The method of Claim 1, wherein the absorbance of the first thermoplastic polymer is at most 2 AU per mm of film thickness and the absorbance of the second thermoplastic polymer is at least 5 AU per mm of film thickness.

3. The method any one of Claims 1 to 2, wherein the powder has a sphericity of at least 0.9.

4. The method of any one of the previous claims, wherein the first thermoplastic polymer is a polyolefin.

5. The method of Claim 4, wherein the polyolefin is polyethylene, polypropylene a copolymer of ethylene and a C₄ to C₁₂ alkene monomer, a copolymer of propylene and a C₄ to C₁₂ alkene monomer or mixture thereof.

6. The method of any one of the previous claims, wherein the second thermoplastic polymer is a functionalized polyolefin.

7. The method of Claim 6, wherein the functionalized polyolefin is a functionalized polyethylene, polypropylene or mixture thereof.

8. The method of any one of the preceding claims, wherein the composite particulates have at most 2 percent porosity.

## Patentansprüche

1. Verfahren für ein additives Fertigungsverfahren durch selektives Sintern, umfassend
(i) Bereitstellen eines Pulvers, umfassend Verbundstoffteilchen, umfassend ein erstes thermoplastisches Polymer und ein zweites thermoplastisches Polymer, die miteinander durchsetzt sind,
wobei das zweite thermoplastische Polymer eine kontinuierliche Matrix ist und das erste thermoplastische Polymer diskontinuierlich als Körner innerhalb der kontinuierlichen Matrix des zweiten thermoplastischen Polymers dispergiert ist; oder
wobei das erste thermoplastische Polymer eine kontinuierliche Matrix ist und das zweite thermoplastische Polymer diskontinuierlich als Körner innerhalb der kontinuierlichen Matrix des ersten thermoplastischen Polymers dispergiert ist;
und wobei die Körner eine mittlere Größe von 0,05 Mikrometer bis 5 Mikrometer aufweisen;
(ii) Abscheiden einer Schicht des Pulvers auf einer Zieloberfläche,
(iii) Bestrahlen eines ausgewählten Anteils des Pulvers, sodass das Pulver gesintert wird, wobei die Verbundstoffteilchen des Anteils innerhalb der Schicht gebunden werden, um eine gesinterte Schicht zu bilden,
(iv) Wiederholen der Schritte (i) bis (iii), um aufeinanderfolgende gesinterte Schichten zu bilden, die ebenso miteinander verbunden sind, und
(v) Entfernen der nicht gebundenen Anteile des Pulvers, um ein durch ein additives Fertigungsverfahren hergestelltes Teil zu ergeben.

2. Verfahren nach Anspruch 1, wobei die Absorption des ersten thermoplastischen Polymers höchstens 2 AU pro mm der Foliendicke beträgt und die Absorption des zweiten thermoplastischen Polymers mindestens 5 AU pro mm Foliendicke beträgt.

3. Verfahren nach einem der Ansprüche 1 bis 2, wobei das Pulver eine Sphärizität von mindestens 0,9 aufweist.

4. Verfahren nach einem der vorstehenden Ansprüche, wobei das erste thermoplastische Polymer ein Polyolefin ist.

5. Verfahren nach Anspruch 4, wobei das Polyolefin Polyethylen, Polypropylen, ein Copolymer aus Ethylen und einem C₄- bis C₁₂-Alkenmonomer, ein Copolymer aus Propylen und einem C₄- bis C₁₂-Alkenmonomer oder eine Mischung davon ist.

6. Zusammensetzung nach einem der vorstehenden Ansprüche, wobei das zweite thermoplastische Polymer ein funktionalisiertes Polyolefin ist.

7. Verfahren nach Anspruch 6, wobei das funktionalisierte Polyolefin ein funktionalisiertes Polyethylen, Polypropylen oder eine Mischung davon ist.

8. Verfahren nach einem der vorstehenden Ansprüche, wobei die Verbundstoffteilchen zu höchstens 2 Prozent Porosität aufweisen.

## Revendications

1. Procédé de fabrication additive par frittage sélectif comprenant,
(i) la fourniture d'une poudre comprenant des matières particulaires composites comprenant un premier polymère thermoplastique et un second polymère thermoplastique entremêlés l'un dans l'autre,
dans lequel le second polymère thermoplastique est une matrice continue et le premier polymère thermoplastique est dispersé de manière discontinue sous forme de grains au sein de la matrice continue du second polymère thermoplastique ; ou
dans lequel le premier polymère thermoplastique est une matrice continue et le second polymère thermoplastique est dispersé de manière discontinue sous forme de grains au sein de la matrice continue du premier polymère thermoplastique ;
et dans lequel les grains ont une taille médiane de 0,05 micromètre à 5 micromètres ;
(ii) le dépôt d'une couche de ladite poudre à niveau d'une surface cible,
(iii) l'irradiation d'une partie sélectionnée de ladite poudre de sorte que ladite poudre subit un frittage, liant les particules composites de ladite partie au sein de la couche pour former une couche frittée,
(iv) la répétition des étapes (i) à (iii) pour former des couches frittées successives qui sont également liées les unes aux autres, et
(v) le retrait des parties non liées de la poudre pour obtenir une pièce issue de fabrication additive.

2. Procédé selon la revendication 1, dans lequel l'absorbance du premier polymère thermoplastique est au plus de 2 AU par mm d'épaisseur de film et l'absorbance du second polymère thermoplastique est au moins de 5 AU par mm d'épaisseur de film.

3. Procédé selon l'une quelconque des revendications 1 à 2, dans lequel la poudre présente une sphéricité d'au moins 0,9.

4. Procédé selon l'une quelconque des revendications précédentes, dans lequel le premier polymère thermoplastique est une polyoléfine.

5. Procédé selon la revendication 4, dans lequel la polyoléfine est du polyéthylène, du polypropylène un copolymère d'éthylène et d'un monomère alcène en C₄ à C₁₂, un copolymère de propylène et d'un monomère alcène en C₄ à C₁₂ ou un mélange de ceux-ci.

6. Procédé selon l'une quelconque des revendications précédentes, dans lequel le second polymère thermoplastique est une polyoléfine fonctionnalisée.

7. Procédé selon la revendication 6, dans lequel la polyoléfine fonctionnalisée est un polyéthylène, polypropylène fonctionnalisé ou mélange de ceux-ci.

8. Procédé selon l'une quelconque des revendications précédentes, dans lequel les matières particulaires composites ont au plus 2 pour cent de porosité.
